# EUROPÄISCHE PATENTSCHRIFT

(11) **EP 4 276 001 B1**
(45) Veröffentlichungstag und Bekanntmachung des Hinweises auf die Patenterteilung: **07.05.2025**
(21) Anmeldenummer: 23159664.4
(22) Anmeldetag: 02.03.2023
(51) Int. Cl.: B62K 23/04, B62L 3/02

(54) **EINSPURIGES KRAFTFAHRZEUG, VERFAHREN ZUM BETREIBEN DES EINSPURIGEN KRAFTFAHRZEUGS**
SINGLE-TRACK MOTOR VEHICLE, METHOD FOR OPERATING
VÉHICULE À MOTEUR À DEUX ROUES, PROCÉDÉ DE FONCTIONNEMENT

(30) Priorität: 12.05.2022 DE 102022204646
(43) Veröffentlichungstag der Anmeldung: 15.11.2023
(73) Patentinhaber: Robert Bosch GmbH, 70442 Stuttgart (DE)
(72) Erfinder: Niedermair, Peter, 71636 Ludwigsburg (DE); Steinert, Alexander, 71636 Ludwigsburg (DE)

(56) Entgegenhaltungen:
- EP-A1- 2 332 819
- EP-A2- 2 314 473
- US-A1- 2012 111 137

## Beschreibung

Die Erfindung betrifft ein Einspuriges Kraftfahrzeug, insbesondere Motorrad, mit einer Antriebsmaschine, mit zumindest einem Lenker und mit zumindest einem von einem Fahrer des Kraftfahrzeugs bewegbaren Bedienelement, und mit einer Einrichtung, die dazu ausgebildet ist, in Abhängigkeit von einer Bewegung des Bedienelements eine Fahrgeschwindigkeit des Kraftfahrzeugs zu beeinflussen. Weiterhin betrifft die Erfindung ein Verfahren zum Betreiben eines derartigen Kraftfahrzeugs.

### Stand der Technik

Kraftfahrzeuge der eingangs genannten Art sind aus dem Stand der Technik bekannt. Bei Einspurfahrzeugen, insbesondere Motorrädern, ist eine Bedieneinrichtung zum Vorgeben eines Antriebsdrehmoments üblicherweise in Form eines Gasdrehgriffs an einem Lenker beziehungsweise an einer Lenkstange des Kraftfahrzeugs angeordnet. Üblicherweise weist die Bedieneinrichtung zusätzlich zu einem von dem Benutzer oder Fahrer drehbaren Gasdrehgriff auch einen Bremshebel auf. Durch Verdrehen des Gasdrehgriffs entgegen der Kraft einer Rückstellfeder gibt der Fahrer ein Antriebsdrehmoment vor. Dazu ist eine Einrichtung vorgesehen, die in Abhängigkeit von der Drehstellung des Drehgriffs beispielsweise einen Verbrennungsmotor oder Elektromotor des Kraftfahrzeugs durch Vorgabe eines Antriebsdrehmoments ansteuert. Eine derartige Einrichtung ist beispielsweise ein Steuergerät, insbesondere ein Motorsteuergerät, des Kraftfahrzeugs. Dokument EP2314473A2 zeigt die Präambel des Anspruchs 1.

Die erfindungsgemäße Bedieneinrichtung mit den Merkmalen des Anspruchs 1 hat den Vorteil, dass eine Verzögerung des Kraftfahrzeugs verschleißfrei oder nahezu verschleißfrei erfolgt und darüber hinaus die Reichweite des Kraftfahrzeugs erhöht. Erfindungsgemäß ist hierzu vorgesehen, dass die Einrichtung dazu ausgebildet ist, in Abhängigkeit von einer Bewegung des Bedienelements in eine erste Richtung die elektrisch arbeitend ausgebildete Antriebsmaschine zum Verzögern des Kraftfahrzeugs generatorisch zu betreiben. Durch das Verzögern im generatorischen Betrieb wird eine Rekuperation ausgeführt, elektrische Energie also zurückgewonnen und insbesondere in einem elektrischen Energiespeicher des Einspurfahrzeugs gespeichert, so dass sie zu einem späteren Zeitpunkt beispielsweise zur Beschleunigung des Kraftfahrzeugs in einem motorischen Betrieb der Antriebsmaschine zur Verfügung steht.

Vorzugsweise ist die Einrichtung dazu ausgebildet, in Abhängigkeit von einer Bewegung des Bedienelements in eine zweite, der ersten Richtung insbesondere entgegengesetzten Richtung, oder in Abhängigkeit von einer Bewegung eines weiteren Bedienelements der Bedieneinrichtung die Antriebsmaschine zum Beschleunigen des Kraftfahrzeugs motorisch zu betreiben. Gemäß der ersten Ausführungsform wird somit vom Benutzer sowohl die Beschleunigung als auch die rekuperative Verzögerung durch Betätigen nur eines Bedienelements vorgegeben. Gemäß der zweiten Ausführungsform stehen dem Fahrer zum Beschleunigen und Verzögern zwei unterschiedliche Bedienelemente zur Verfügung.

Erfindungsgemäss ist das Bedienelement als Gasdrehgriff ausgebildet. Dadurch kann der Fahrer auf ein bei Einspurfahrzeugen üblicherweise vorhandenes Bedienelement zurückgreifen. Außerdem ergibt sich der Vorteil, dass der Fahrer des Kraftfahrzeugs auf ein Umgreifen zum Erreichen eines separaten Bremshebels verzichten und dennoch ein Verzögerungsdrehmoment beziehungsweise eine Verzögerung des Kraftfahrzeugs erreichen kann.

Erfindungsgemäss ist der Gasdrehgriff zylinderförmig ausgebildet und um seine Längsachse drehbar gelagert, wobei außerdem eine einen Drehendanschlag für den Gasdrehgriff aufweisende Anschlageinrichtung und eine Rückstellfeder vorhanden sind, wobei die Rückstellfeder den Gasdrehgriff in Richtung des Drehanschlags mit einem Rückstelldrehmoment beaufschlagt, sodass der Gasdrehgriff durch das Rückstelldrehmoment bis an den Drehendanschlag drehbar ist, und dass der Drehendanschlag derart ausgebildet ist, dass er durch ein auf den Gasdrehgriff aufgebrachtes Drehmoment, das größer als der Rückstelldrehmoment ist, überwindbar ist. Dadurch lässt sich der Gasdrehgriff in zwei Richtungen ausgehend von dem Drehanschlag bewegen beziehungsweise drehen, so dass mit dem Gasdrehgriff sowohl die Beschleunigung als auch die rekuperative Verzögerung einstellbar ist.

Im Unterschied zu herkömmlichen Gasdrehgriffen ist durch die Ausbildung nunmehr ein Gasdrehgriff geboten, der auch über die neutrale Ausgangsstellung, in welcher der Gasdrehgriff an dem Drehendanschlag anliegt, sodass kein Antriebsdrehmoment gefordert wird, weitergedreht werden kann, sofern das aufgebrachte Drehmoment das Rückhaltemoment des Drehanschlags überwindet. Dadurch, dass er Drehanschlag überwindbar ausgebildet ist, weist er ein Rückhaltemoment auf, dass den Gasdrehgriff entgegen der Kraft des Rückstelldrehmoments in der an den Drehanschlag anliegenden Neutralstellung hält. Dazu ist zweckmäßigerweise das Rückhaltemoment größer als das Rückstelldrehmoment. Erst dann, wenn der Fahrer auf den Gasdrehgriff ein Drehmoment aufbringt, dass das Rückhaltemoment überwindet, und dass in die gleiche Richtung wie das Rückstelldrehmoment wirkt, ist der Drehanschlag überwindbar und der Gasdrehgriff entgegen der üblichen Beschleunigungsdrehrichtung verdrehbar. Durch das Überdrehen der Neutralstellung in die erste Drehrichtung wird der Gasdrehgriff somit in einen negativen Momentenbereich verdreht, in welchem die Einrichtung dem Kraftfahrzeug ein Sollverzögerungsmoment vorgeht. Dadurch kann der Fahrer durch ein Überdrehen des Drehanschlags das Kraftfahrzeug verzögern, ohne dazu den ansonsten notwendigen Bremshebel betätigen zu müssen. Das Sollverzögerungsmoment wird gemäß einer ersten Ausführungsform einer Reibbremseinrichtung beziehungsweise einem Reibbremssystem zur Umsetzung vorgegeben und gemäß einer zweiten Ausführungsform einer als Elektromaschine ausgebildeten Antriebseinrichtung des Kraftfahrzeugs, sodass durch einen generatorischen Betrieb der Elektromaschine das Kraftfahrzeug verzögert und dadurch Verschleiß an dem Reibbremssystem vermieden wird.

Erfindungsgemäss ist der Drehanschlag entgegen der Federkraft einer Vorspannfeder verlagerbar und liegt im Bewegungsweg eines Anschlagelements des Gasdrehgriffs. Wird der Gasdrehgriff durch die Rückstellfeder in die erste Richtung verlagert, so trifft das Anschlagelement auf den Drehanschlag und verhindert ein weiteres Verdrehen des Trägers in die erste Richtung. Erst durch Überwinden der Federkraft der Vorspannfeder, die das Rückhaltemoment bewirkt, wie es obenstehend beschrieben wurde, ist der Gasdrehgriff über die Neutralstellung hinaus in den negativen Momentenbereich der Bedieneinrichtung verdrehbar. Hierdurch ist eine einfache mechanische Überwindbarkeit des Drehanschlags geboten.

Gemäß einer weiteren Ausführungsform der Erfindung weist die Anschlageinrichtung einen Drehanschlag auf, der mit dem Gasdrehgriff magnetisch zusammenwirkt. Dabei ist die magnetische Zusammenwirkung insbesondere derart ausgebildet, dass der Gasdrehgriff in der Neutralstellung magnetisch arretiert ist. Durch Überwinden der wirkenden Magnetkraft ist der Gasdrehgriff über den Drehanschlag hinaus in die erste Richtung verdrehbar. Auch hierdurch ist eine einfache und kostengünstige, und insbesondere verschleißarme Überwindbarkeit des Drehanschlags geboten.

Weiter ist bevorzugt vorgesehen, dass die Einrichtung dazu ausgebildet ist, mit zunehmendem Abstand des Gasdrehgriffs von dem Drehendanschlag in die erste Richtung eine Sollverzögerung und mit zunehmendem Abstand in die zweite Richtung das Sollantriebsdrehmoment zu erhöhen. Umso weiter also der Gasdrehgriff in die eine oder die andere Richtung bewegt beziehungsweise verdreht wird, desto größer wird das vorgegebene Antriebsdrehmoment oder die vorgegebene Sollverzögerung. Dadurch kann der Fahrer die Beschleunigung und die Verzögerung des Kraftfahrzeugs vorteilhaft bestimmen.

Weiter ist bevorzugt vorgesehen, dass die Einrichtung dazu ausgebildet ist, als Soll-Verzögerung zusätzlich ein Bremsmoment für eine Reibbremsanlage des Kraftfahrzeugs vorzugeben. Hierdurch wird insbesondere dann ein Bremsmoment für die mechanische Bremsanlage vorgegeben, wenn eine Sollverzögerung vom Fahrer durch Verdrehen des Gasdrehgriffs gefordert wird, die allein durch die Elektromaschine nicht realisierbar wäre.

Das erfindungsgemäße Verfahren mit den Merkmalen des Anspruchs 9 zeichnet sich dadurch aus, dass eine elektrische Antriebsmaschine in Abhängigkeit von einer Bewegung des Bedienelements in eine erste Richtung zum Verzögern des Kraftfahrzeugs generatorisch betrieben wird. Es ergeben sich hieraus die obenstehend bereits genannten Vorteile.

Weitere Vorteile und bevorzugte Merkmalskombinationen ergeben sich insbesondere aus dem zuvor Beschriebenen sowie aus Ansprüchen. Im Folgenden soll die Erfindung anhand der Zeichnung näher erläutert werden. Dazu zeigen
- Figur 1: ein vorteilhaftes Kraftfahrzeug in einer vereinfachten Seitenansicht,
- Figur 2: eine vorteilhafte Bedieneinrichtung des Kraftfahrzeugs in einer vereinfachten Draufsicht, und
- Figur 3: eine vereinfachte Darstellung der Bedieneinrichtung.

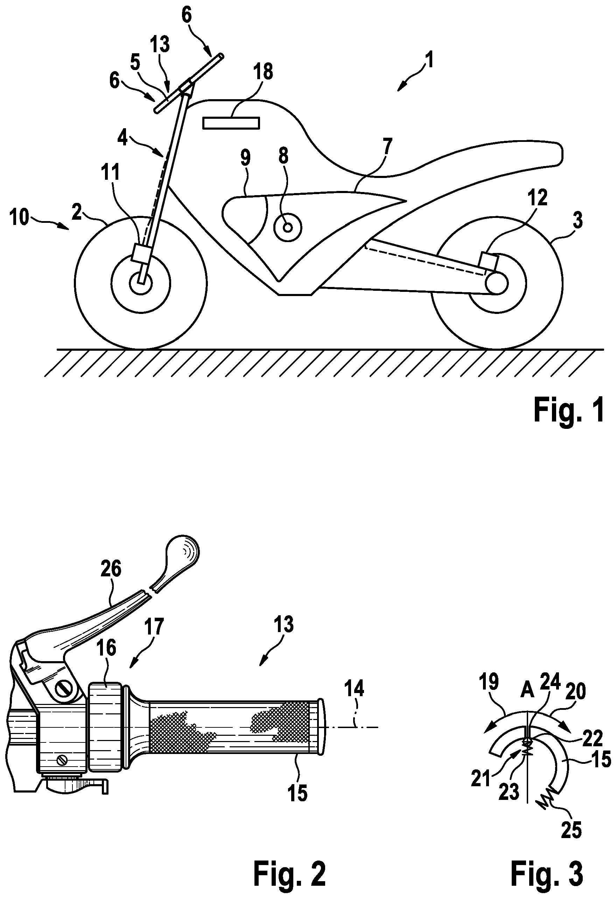

Figur 1 zeigt in einer vereinfachten Seitenansicht ein Kraftfahrzeug 1, dass als Einspurfahrzeug oder Motorrad ausgebildet ist. Dazu weist das Kraftfahrzeug 1 ein Vorderrad 2 und ein Hinterrad 3 auf, die in Vorwärtsfahrtrichtung des Kraftfahrzeugs 1 hintereinander liegend angeordnet sind, sodass sie bei Geradeausfahrt auf nur einer Spur abrollen. Das Vorderrad 2 ist wie bei Motorrädern üblich lenkbar und dazu an einem Lenker 4 des Kraftfahrzeugs 1 drehbar gelagert, der um eine Hochachse verschwenkbar ist. Der Lenker 4 weist an seinem oberen Ende eine Querstange oder Lenkstange 5 auf, die an ihren seitlichen Enden Handgriffe 6 für den Fahrer des Kraftfahrzeugs 1 aufweist. Das Hinterrad 3 ist mit einer Antriebseinrichtung 7 mechanisch gekoppelt, beispielsweise durch einen Antriebsriemen oder eine Antriebskette, wobei die Antriebseinrichtung 7 gemäß dem vorliegenden Ausführungsbeispiel als Elektroantrieb mit einer elektrischen Antriebsmaschine 8 ausgebildet ist. Zum Betreiben der Antriebsmaschine 8 weist das Kraftfahrzeug 1 außerdem einen elektrischen Speicher 9 auf. Zusätzlich weist das Kraftfahrzeug 1 ein Reibbremssystem 10 auf, dass eine dem Vorderrad 2 zugeordnete Reibbremse 11 und eine dem Hinterrad zugeordnete Reibbremse 12 aufweist, die in Figur 1 nur schematisch gezeigt.

Zum Ansteuern des Reibbremssystems 10 sowie der Antriebsvorrichtung 7 ist an zumindest einem der Handgriffe 6 eine vorteilhafte Bedieneinrichtung 13 angeordnet.

Figur 2 zeigt eine vereinfachte Draufsicht auf einen Handgriff 6 und die Bedieneinrichtung 13. Die Bedieneinrichtung13 weist an dem freien Ende einen zylinderförmigen und um seine Längsachse 14 verdrehbar gelagerten Gasdrehgriff 15 auf, der insbesondere koaxial zu der Lenkstange 5 angeordnet ist. Der Gasdrehgriff 15 ist mit einer Sensoreinrichtung 16 verbunden, welche die Drehstellung des Gasdrehgriffs 15 überwacht und in Abhängigkeit von der Drehstellung beziehungsweise der Verdrehung des Gasdrehgriffs 15 zumindest die Antriebsvorrichtung 7 ansteuert. Die Sensoreinrichtung 16 ist somit insbesondere Bestandteil einer vorteilhaften Einrichtung 17, die in Abhängigkeit von einem von dem Fahrer durch Verdrehen des Gasdrehgriffs 15 vorgegebenen Fahrwunsch die Antriebsvorrichtung 7 ansteuert. Insbesondere weist die Einrichtung 17 außerdem ein Steuergerät 18 auf, wie beispielsweise in Figur 1 gezeigt, dass die von der Sensoreinrichtung 16 erfassten Signale auswertet und in Abhängigkeit davon Steuerbefehle für die Antriebsvorrichtung 7 erzeugt.

So erfasst die Sensoreinrichtung 16 eine Bewegung des Gasdrehgriffs 15 ausgehend von einer Ausgangsstellung A in eine erste Richtung gemäß Pfeil 19 und in eine zweite Richtung gemäß Pfeil 20, wie in Figur 3 gezeigt. Figur 3 zeigt dabei eine Draufsicht auf den Gasdrehgriff 15 in Richtung seiner Drehachse.

Die Ausgangsstellung A wird durch einen Drehendanschlag, insbesondere überwindbaren Drehanschlag 21 definiert, der beispielsweise als Kugelelement 22 ausgebildet ist, das durch eine Vorspannfeder 23 in Richtung des Gasdrehgriffs 15, insbesondere radial von innen, gedrängt ist, um in eine Aussparung 24 des Gasdrehgriffs 15 in der Ausgangsstellung A einzugreifen.

Wird das durch den Drehendanschlag 21 bereitgestellte Haltemoment durch Aufbringen eines ausreichend hohen Drehmoments auf den Gasdrehgriff 15 überwunden, so kann der Gasdrehgriff 15 in beide Richtungen 19, 20 bewegt werden. Insbesondere wirkt der Drehanschlag nur in die erste Richtung als Überwindbarer Anschlag. In der Ausgangsstellung A liegt der Gasdrehgriff 15 bevorzugt derart an dem Drehendanschlag 21 an, dass zum Verlagern des Gasdrehgriffs 15 in die zweite Richtung lediglich die Gegenkraft einer Rückstellfeder 25 überwunden werden muss. Vorzugsweise ist dem Gasdrehgriff 15 diese Rückstellfeder 25 derart zugeordnet - in Figur 3 vereinfacht gezeigt - , durch sie der Gasdrehgriff 15 in die Ausstellung A zurückgedrängt wird, wenn der Fahrer den Gasdrehgriff 15 nicht mehr mit einem Handdrehmoment beaufschlägt. Insbesondere wirkt dabei die Rückstellfeder 25 entgegen der Bewegungsrichtung gemäß Pfeil 20. Die Sensoreinrichtung 16 erfasst nunmehr die Drehposition der Drehbewegung des Gasdrehgriffs 15 ausgehend von der Ausgangsstellung in die eine oder andere Richtung der Pfeile 19, 20, um die Elektromaschine 8 anzusteuern.

Dabei ist vorliegend vorgesehen, dass in dem Fall, in welchem der Gasdrehgriff 15 in die zweite Richtung 20 gelagert wird, die Sensoreinrichtung 16 dies erfasst und das Steuergerät 18 in Abhängigkeit von erfassten Bewegung und/oder Position des Gasdrehgriffs 15 die Elektromaschine 8 dazu ansteuert, ein Beschleunigungsmoment beziehungsweise ein Antriebsdrehmoment zu erzeugen.

Wird der Gasdrehgriff 15 über den Drehendanschlag 21 hinaus beziehungsweise über die Ausgangsstellung A in die entgegengesetzte Richtung bewegt, gemäß Pfeil 19, wird dies durch die Sensoreinrichtung 16 erfasst und das Steuergerät 18 steuert infolgedessen die Elektromaschine 8 dazu an, generatorisch zu arbeiten und dadurch ein verzögerndes Drehmoment zu erzeugen. In dem generatorischen Betrieb wird außerdem elektrische Energie erzeugt, die insbesondere in dem elektrischen Speicher 9 gespeichert wird. Dabei wird das generatorische beziehungsweise verzögernde Moment vorzugsweise mit zunehmendem Abstand des Gasdrehgriffs 15 von der Ausgangsstellung 15 erhöht.

Der Benutzer kann somit durch das Verdrehen des Gasdrehgriffs 15 in die eine oder in die andere Richtung ein Beschleunigungsmoment oder ein Sollverzögerungsmoment dem Kraftfahrzeug 1 vorgeben. Dadurch, dass im verzögernden Betrieb das Verzögerungsmoment durch den generatorischen Betrieb der Elektromaschine 8 erzeugt wird, liegt ein Rekuperationsbetrieb vor, in welchem das Kraftfahrzeug 1 verzögert und elektrische Energie erzeugt wird. Dadurch wird die Reichweite des Kraftfahrzeugs 1 zum einen verlängert, und zum anderen wird der Verschleiß, der ansonsten durch das Betätigen des mechanischen Reibbremssystems 10 beziehungsweise durch zumindest eine der Reibbremsen 11 oder 12 erfolgen würde, vermieden.

Alternativ zur Integration einer Bewegung zum Verzögern des Kraftfahrzeugs 1 in den Gasdrehgriff, weist das Kraftfahrzeug 1 bevorzug zumindest ein weiteres Bedienelement, wie beispielsweise einen Bremsgriff 26, wie er in Figur 2 dargestellt ist, auf. Das Steuergerät 18 gibt dann in Abhängigkeit von einer Betätigung des Bremsgriffs 26 das Sollverzögerungsmoment für die elektrische Antriebsmaschine 8 vor. Optional wird durch das Steuergerät 18 auch das Reibbremssystem 10 zusätzlich angesteuert, insbesondere dann, wenn eine angeforderte Verzögerung nicht allein durch die Elektromaschine 8 im generatorischen Betrieb realisierbar ist.

## Patentansprüche

1. Einspuriges Kraftfahrzeug (1), insbesondere Motorrad, mit einer Antriebsmaschine (8), mit zumindest einem Lenker (4) und mit zumindest einem von einem Fahrer des Kraftfahrzeugs (1) bewegbaren Bedienelement, und mit einer Einrichtung (17), die dazu ausgebildet ist, in Abhängigkeit von einer Bewegung des Bedienelements eine Fahrgeschwindigkeit des Kraftfahrzeugs (1) zu beeinflussen, wobei die Einrichtung (17) dazu ausgebildet ist, in Abhängigkeit von einer Bewegung des Bedienelements in eine erste Richtung (19) die elektrisch arbeitend ausgebildete Antriebsmaschine (8) zum Verzögern des Kraftfahrzeugs (1) generatorisch zu betreiben, wobei dass das Bedienelement als Gasdrehgriff (15) ausgebildet ist und der Gasdrehgriff zylinderförmig ausgebildet und um seine Längsachse drehbar gelagert ist, mit einem Drehendanschlag (21) für den Gasdrehgriff (15) und mit einer Rückstellfeder (25), die den Gasdrehgriff (15) in Richtung des Drehanschlags (21) mit einem Rückstelldrehmoment beaufschlagt, sodass der Gasdrehgriff (15) durch das Rückstelldrehmoment bis an den Drehendanschlag (21) drehbar ist, und dass der Drehendanschlag (21) derart ausgebildet ist, dass er durch ein auf den Gasdrehgriff (15) aufgebrachtes Drehmoment, das größer als der Rückstelldrehmoment ist, überwindbar ist, und **dadurch gekennzeichnet, dass** der Drehendanschlag (21) entgegen der Federkraft einer Vorspannfeder (23) verlagerbar ist und im Bewegungsweg des Gasdrehgriffs (15) liegt.

2. Kraftfahrzeug nach Anspruch 1, **dadurch gekennzeichnet, dass** die Einrichtung (17) dazu ausgebildet ist, in Abhängigkeit von einer Bewegung des Bedienelements in eine zweite, der ersten Richtung insbesondere entgegengesetzte Richtung (20), oder in Abhängigkeit von einer Bewegung eines weiteren Bedienelements die Antriebsmaschine (8) zum Beschleunigen des Kraftfahrzeugs (1) motorisch zu betreiben.

3. Kraftfahrzeug nach einem der vorhergehenden Ansprüche, **dadurch gekennzeichnet, dass** der Drehendanschlag (21) mit dem Gasdrehgriff (15) magnetisch zusammenwirkt.

4. Kraftfahrzeug nach einem der vorhergehenden Ansprüche, **dadurch gekennzeichnet, dass** die Einrichtung (17) dazu ausgebildet ist, mit zunehmendem Abstand des Gasdrehgriffs (15) von dem Drehendanschlag (21) in die erste Richtung (19) die Sollverzögerung und mit zunehmendem Abstand in die zweite Richtung (20) ein Sollantriebsdrehmoment zu erhöhen.

5. Kraftfahrzeug nach einem der vorhergehenden Ansprüche, **dadurch gekennzeichnet, dass** die Einrichtung (17) dazu ausgebildet ist, für die Sollverzögerung zusätzlich ein Sollbremsmoment für ein Reibbremssystem (10) des Kraftfahrzeugs (1) vorzugeben.

6. Verfahren zum Betreiben eines gemäß einem der Ansprüche 1 bis 5 ausgebildeten einspurigen Kraftfahrzeugs (1), **dadurch gekennzeichnet, dass** die elektrische Antriebsmaschine (8) in Abhängigkeit von einer Bewegung des Bedienelements in eine erste Richtung (19) zum Verzögern des Kraftfahrzeugs (1) generatorisch betrieben wird.

## Claims

1. Single-track motor vehicle (1), in particular motorcycle, having a drive machine (8), having at least one handlebar (4) and having at least one operator control element, which can be moved by a rider of the motor vehicle (1), and having a device (17) which is designed to influence a travelling speed of the motor vehicle (1) depending on a movement of the operator control element, wherein the device (17) is designed to operate the electrically operating drive machine (8) as a generator in order to decelerate the motor vehicle (1) depending on a movement of the operator control element in a first direction (19), wherein the operator control element is in the form of a throttle twist grip (15)
and
the throttle twist grip is cylindrical and mounted rotatably about its longitudinal axis, having a rotary end stop (21) for the throttle twist grip (15) and having a return spring (25) which applies a return torque to the throttle twist grip (15) in the direction of the rotary stop (21), so that the throttle twist grip (15) can be rotated by the return torque as far as the rotary end stop (21), and that the rotary end stop (21) is designed in such a way that it can be overcome by a torque applied to the throttle twist grip (15), the torque being greater than the return torque, and **characterized in that** the rotary end stop (21) can be displaced against the spring force of a preloading spring (23) and lies in the movement path of the throttle twist grip (15).

2. Motor vehicle according to Claim 1, **characterized in that** the device (17) is designed to drive the drive machine (8) as a motor in order to accelerate the motor vehicle (1) depending on a movement of the operator control element in a second direction (20), which is in particular opposite to the first direction, or depending on a movement of a further operator control element.

3. Motor vehicle according to either of the preceding claims, **characterized in that** the rotary end stop (21) magnetically interacts with the throttle twist grip (15).

4. Motor vehicle according to any of the preceding claims, **characterized in that** the device (17) is designed to increase the target deceleration as the distance of the throttle twist grip (15) from the rotary end stop (21) in the first direction (19) increases and to increase a target drive torque as the distance in the second direction (20) increases.

5. Motor vehicle according to any of the preceding claims, **characterized in that** the device (17) is designed to additionally specify a target braking torque for a friction brake system (10) of the motor vehicle (1) for the target deceleration.

6. Method for operating a single-track motor vehicle (1) which is designed according to any of Claims 1 to 5, **characterized in that** the electric drive machine (8) is operated as a generator in order to decelerate the motor vehicle (1) depending on a movement of the operator control element in a first direction (19).

## Revendications

1. Véhicule motorisé (1) à roues en ligne, notamment motocyclette, comprenant une machine motrice (8), comprenant au moins un guidon (4) et comprenant au moins un élément de commande pouvant être déplacé par un conducteur du véhicule motorisé (1), et comprenant un dispositif (17) qui est configuré pour influencer une vitesse de déplacement du véhicule motorisé (1) en fonction d'un mouvement de l'élément de commande, le dispositif (17) étant configuré pour, en fonction d'un mouvement de l'élément de commande dans une première direction (19), faire fonctionner la machine motrice (8), configurée pour fonctionner électriquement, en régime de générateur afin de ralentir le véhicule automobile (1), l'élément de commande étant réalisé sous la forme d'une poignée tournante d'accélérateur (15)
et
la poignée tournante d'accélérateur étant réalisée de forme cylindrique et étant montée de manière à pouvoir tourner autour de son axe longitudinal, avec une butée de fin de rotation (21) pour la poignée tournante d'accélérateur (15) et avec un ressort de rappel (25) qui sollicite la poignée tournante d'accélérateur (15) en direction de la butée de fin de rotation (21) avec un couple de rappel, de sorte que la poignée tournante d'accélérateur (15) peut être tournée par le couple de rappel jusqu'à la butée de fin de rotation (21), et la butée de fin de rotation (21) étant configurée de telle sorte qu'elle peut être surmontée par un couple appliqué à la poignée tournante d'accélérateur (15) qui est supérieur au couple de rappel, et **caractérisé en ce que** la butée de fin de rotation (21) peut être déplacée en s'opposant à la force élastique d'un ressort de précontrainte (23) et se trouve dans la trajectoire de déplacement de la poignée tournante d'accélérateur (15).

2. Véhicule motorisé selon la revendication 1, **caractérisé en ce que** le dispositif (17) est configuré pour faire fonctionner la machine motrice (8) en régime de moteur afin d'accélérer le véhicule motorisé (1) en fonction d'un mouvement de l'élément de commande dans une deuxième direction (20), notamment opposée à la première direction, ou en fonction d'un mouvement d'un élément de commande supplémentaire.

3. Véhicule motorisé selon l'une des revendications précédentes, **caractérisé en ce que** la butée de fin de rotation (21) coopère magnétiquement avec la poignée tournante d'accélérateur (15).

4. Véhicule motorisé selon l'une des revendications précédentes, **caractérisé en ce que** le dispositif (17) est configuré pour augmenter la décélération de consigne lorsque la distance entre la poignée tournante d'accélérateur (15) et la butée de fin de rotation (21) augmente dans la première direction (19) et pour augmenter un couple d'entraînement de consigne lorsque la distance augmente dans la deuxième direction (20).

5. Véhicule motorisé selon l'une des revendications précédentes, **caractérisé en ce que** le dispositif (17) est configuré pour prédéfinir en plus, pour la décélération de consigne, un couple de freinage de consigne pour un système de freinage par friction (10) du véhicule motorisé (1).

6. Procédé pour faire fonctionner un véhicule motorisé (1) à roues en ligne configuré selon l'une des revendications 1 à 5, **caractérisé en ce que** la machine motrice (8) électrique fonctionne en régime de générateur en fonction d'un mouvement de l'élément de commande dans une première direction (19) afin de ralentir le véhicule motorisé (1).
